## Europäisches Patentamt

## European Patent Office

## Office européen des brevets

(11) Veröffentlichungsnummer: **0 054 192**
**A1**

(12) # EUROPÄISCHE PATENTANMELDUNG

(21) Anmeldenummer: **81109708.8**

(22) Anmeldetag: **16.11.81**

(51) Int. Cl.³: **A 61 C 3/14**
**B 25 B 7/12**

(30) Priorität: **10.12.80 DE 3046499**

(43) Veröffentlichungstag der Anmeldung:
**23.06.82 Patentblatt 82/25**

(84) Benannte Vertragsstaaten:
**AT BE CH FR GB IT LI LU NL SE**

(71) Anmelder: **Tonsic, Stanko**
**Sudetenstrasse 30**
**D-6330 Wetzlar-Garbenheim 12(DE)**

(72) Erfinder: **Tonsic, Stanko**
**Sudetenstrasse 30**
**D-6330 Wetzlar-Garbenheim 12(DE)**

(74) Vertreter: **Geitz, Heinrich, Dr.-Ing.**
**Postfach 2708 Kaiserstrasse 156**
**D-7500 Karlsruhe 1(DE)**

(54) **Zange, insbesondere zum Ziehen von Zähnen.**

(57) Die Zange besitzt Greifbacken (22, 23) die zwischen einer Öffnungs- und einer Schließlage gegeneinander bewegbar und in der Schließlage verspannbar sind. Wenigstens eine dieser Greifbacken (22, 23) ist unabhängig von ihrer Betätigbarkeit in die Schließ- und Öffnungslagen bewegbar geführt und mittels eines intermittierend wirkenden Vibrationsantriebs (27) mit vorbestimmter Frequenz und kleiner Amplitude pulsierend angetrieben. Bei einer Ausgestaltung wirkt der Vibrationsantrieb (27) in Richtung der Schließ- und Öffnungsbewegungen der Backen (22, 23). Demgemäß ist wenigstens die mittels des Vibrationsantriebs (27) angetriebene Greifbacke (23) in einem Backenhalter (16) relativ zu den Schließ- und Öffnungsbewegungen bewegbar geführt und der Vibrationsantrieb (27) kann hinsichtlich Frequenz und/oder Amplitude einstellbar sein. Insbesondere ist die Zange zur Verwendung als zahnärztliches Instrument zum Ziehen von Zähnen geeignet und bestimmt.

FIG.1

EP 0 054 192 A1

DR. ING. HEINRICH GEITZ PATENTANWALT 7500 KARLSRUHE 1, POSTFACH 2706

0054192

811860

Anmelder:    Stanko Tonsic

Sudetenstraße 30

6330 Wetzlar-Garbenheim 12

Zange, insbesondere zum Ziehen von Zähnen
=============================================

Die Erfindung betrifft eine Zange nach dem Oberbegriff des Patentanspruchs 1 mit zwei Greifbacken zum Erfassen von Objekten, die zwischen einer Öffnungs- und einer Schließlage gegeneinander bewegbar und in der Schließlage, etwa wenn ein Objekt zwischen den Backen erfaßt ist, verspannbar sind. Insbesondere bezieht sich die Erfindung auf eine derartige, als zahnärztliches Instrument zum Ziehen von Zähnen ausgebildete Zange.

Hinsichtlich ihrer Detailausbildungen an die verschiedenartigsten Verwendungszwecke angepaßte Zangen sind bekannt, deren Greifbacken durch geeignete Mechanismen gegeneinander bewegbar und in den Greiflagen mit mehr oder weniger großen Kräften verspannbar sind.

Im einfachsten Falle bestehen solche Zangen aus zwei über ein Gelenk miteinander verbundenen zweiarmigen Hebeln unterschiedlicher Hebellängen, bei denen die längeren Hebelarme als Betätigungsgriffe und die kürzeren Hebelarme als Greifbacken ausgebildet sind. Die zwischen den Greifbacken derartiger Zangen verwirklichbaren Spannkräfte sind in Abhängigkeit von den an den Betätigungsgriffen durch einen Benutzer aufbringbaren Handkräften durch die unterschiedlichen Längen der Hebelarme bestimmt.

Größere Spannkräfte zwischen den Greifbacken lassen sich verwirklichen, wenn die Handkräfte durch Gelenkgetriebe von den Betätigungsgriffen auf die Greifbacken übertragen werden. Davon unberührt bleibt jedoch das Ziehen von Objekten, wie Stifte oder Bolzen, die in einem Haftgrund aufgenommen sind. Das Erfassen solcher Objekte mit grossen Spannkräften gewährleistet lediglich, daß mittels der Zange große Ausziehkräfte aufgebracht werden können, wobei allenfalls ein in einem Haftgrund aufgenommenes Objekt durch mehrmaliges Aufbringen von Kräften quer zur Ausziehrichtung allmählich gelockert und dadurch die erforderliche Ausziehkraft reduziert werden kann. Genau diese Probleme treten auch beim Ziehen von Zähnen auf und zu diesem Zwecke werden auch Instrumente in Form von Spezialzangen eingesetzt, deren Greifbacken nach Formgebung und Abmessungen dem Verwendungszweck angepaßt sind.

Durch die Erfindung ist demgegenüber eine Zange geschaffen worden, die ein erleichtertes Ziehen selbst festsitzender Objekte dadurch ermöglicht, daß ein solches Objekt nicht einfach mit mehr oder weniger großer Spannkraft zwischen den Greifbacken erfaßt und dann unter der Wirkung manuell aufgebrachter Lockerungs- und Ausziehkräfte aus dem Haftgrund herausgezogen, sondern zuvor mittels auf wenigstens eine der Greifbacken aufgebrachter Vibrationen in seiner Verankerung gelockert wird. Um dies zu erreichen, ist erfindungsgemäß bei einer Zange nach dem Oberbegriff des Patentanspruchs 1 wenigstens eine der Greifbacken unabhängig von deren Bewegbarkeit in die Schließ- und Öffnungslagen bewegbar geführt und mittels eines intermittierend wirkenden Antriebs (Vibrationsantrieb) mit vorbestimmter Frequenz und kleiner Amplitude pulsierend angetrieben.

Dieser Maßnahme kommt insbesondere bei Zangen für dentale Zwecke insofern große Bedeutung zu, als sich unter der Wirkung der im Anwendungsfalle auf einen Zahn aufgebrachten Vibrationen der Zahn bereits nach sehr kurzer Zeit im Zahnfach lockert und dann unter vergleichsweise kleiner Kraftaufwendung aus dem Zahnfach ausgehoben werden kann. Neben dem durch das Aufbringen von Vibrationen schnellen Lockern eines Zahnes besteht der besondere Vorteil jedoch darin, daß das Ziehen weitgehend schmerzlos vor sich geht.

Zweckmäßige Ausgestaltungen der Erfindung sind in den nachgeordneten Patentansprüchen 2 bis 8 angegeben.

So ist es nach Patentanspruch 2 zweckmäßig, daß der Vibrationsantrieb wenigstens einer Greifbacke in Rich-

tung der Schließ- und Öffnungsbewegungen der Backen wirkt und daß demgemäß wenigstens diese Greifbacke in einem Backenhalter relativ zu den Schließ- und Öffnungsbewegungen bewegbar geführt ist. In Wegrichtung der Schließ- und Öffnungsbewegungen findet mithin eine letzteren überlagerte Vibrationsbewegung der Greifbacke mit vorbestimmter Frequenz und kleiner Amplitude statt. Dabei ist es nach Patentanspruch 3 vorteilhaft, diesen Vibrationsantrieb hinsichtlich der erzeugten Frequenz und/oder der Amplitude einstellbar auszulegen, so daß in Abhängigkeit vom jeweiligen Anwendungsfalle Vibrationen mit mehr oder weniger hoher Frequenz und mehr oder weniger großen Amplituden auf ein Objekt, etwa einen Zahn, aufgebracht werden können.

Nach einem weiteren wichtigen Ausgestaltungsmerkmal, welches insbesondere bei der Ausbildung der Zange als zahnärztliches Instrument zum Ziehen von Zähnen Bedeutung hat, kann bei auf eine Greifbacke wirkendem Vibrationsantrieb die zweite Greifbacke elastisch nachgiebig in einem Backenhalter gelagert sein. Die von der einen Greifbacke mit Vibrationsantrieb auf das zu lockernde und zu ziehende Objekt aufgebrachten Pulsationen sind mithin durch die elastisch nachgiebige Lagerung der zweiten Greifbacke in einem Backenhalter abgepuffert. Der weitere Vorteil dieser Ausgestaltung besteht in einer verhältnismäßig einfachen Bauweise insofern, als es eines Vibrationsantriebs für nur eine Greifbacke bedarf, obgleich dabei gleiche Nutzeffekte wie bei auf beide Greifbacken entgegengesetzt phasengleich wirkenden Vibrationsantrieben erzielt werden.

- . -

Hinsichtlich der technischen Durchbildung einer derartigen Zange stehen dem Fachmanne natürlich vielfältige Möglichkeiten zur Verfügung. Im Interesse einer schnellen und einfachen Anpaßbarkeit an unterschiedliche Verwendungszwecke hat es sich jedoch als zweckmäßig erwiesen, wenn die Greifbacken in Backenhaltern austauschbar aufgenommen sind. Eine andere zweckmäßige Ausgestaltung sieht einen an einem Handstück in Richtung der Schließ- und Öffnungsbewegungen verschiebbar geführten Backenhalter mit einer Greifbacke vor, während der andere Backenhalter dem Handstück fest zugeordnet ist.

Ein weiteres wichtiges Erfindungsmerkmal besteht darin, daß die Greifbacken mittels eines von Hand betätigbaren Kniehebelantriebs in ihre Greif- und Spannlagen betätigbar sind, wodurch unter Verwendung einfachster Mittel die Aufbringung großer Spannkräfte gesichert ist. Dabei kann der Kniehebelantrieb für den am Handstück geführten Backenhalter aus einem mit seinem einen Ende am Handstück angelenkten Betätigungshebel und einer dessen anderes Ende mit dem Backenhalter verbindenden Drucklasche bestehen.

Eine Ausführungsform der Erfindung soll nachstehend anhand der beigefügten Zeichnung erläutert werden. In schematischen Ansichten zeigen:

Fig. 1 die Zange mit Vibrationsantrieb für eine Greifbacke in einer Seitenansicht,

Fig. 2 eine Draufsicht zu Fig. 1 und

Fig. 3 einen Schnitt gemäß der Schnittlinie III-III in Fig. 1 durch einen bewegbaren Backenhalter und dessen Längsführung.

Bei der in ihrer Gesamtheit mit 10 bezeichneten Zange besteht ein Handstück 11 aus einem Griffabschnitt 12 und einem Führungsabschnitt 13. An das Ende des Führungsabschnittes 13 ist einstückig ein Greifbackenhalter 14 angeformt. An den Greifbackenhalter 14 erstreckt sich in Richtung auf das Griffstück 12 eine Schwalbenschwanzführung 15 fort, in der ein zweiter Greifbackenhalter 16 längsbeweglich aufgenommen ist. Auf der vom festen Greifbackenhalter 14 entfernten Seite ist an den Greifbackenhalter 16 eine Drucklasche 17 über einen Zapfen 18 angelenkt, deren anderes Ende über einen Zapfen 19 mit einem Betätigungshebel 20 verbunden ist. Das andere Ende des Betätigungshebels 20 ist über einen Zapfen 21 gelenkig an das vom Greifbackenhalter 16/entfernte Ende des Griffstücks 12 angelenkt. Der Betätigungshebel 20 und die Drucklasche 17 bilden einen je nach Stellung des längsbeweglich in der Schwalbenschwanzführung 15 aufgenommenen Greifbackenhalters 16 mehr oder weniger eingeknickten Kniehebelantrieb für den Greifbackenhalter 16.

Jedem der beiden Greifbackenhalter 14, 16 ist austauschbar ein Greifbacken 22, 23 zugeordnet. Von dem Greifbacken 22 erstreckt sich ein in einer parallel zur Führungsrichtung der Schwalbenschwanzführung 15 verlaufenden Führungsbohrung aufgenommener Führungszapfen 24 fort. Der Greifbacken 22 ist begrenzt in Führungsrichtung des Führungszapfens 24 beweglich, jedoch mittels einer nicht gezeigten Arretierung innerhalb der vorgegebenen Grenzen seiner Bewegbarkeit festgelegt. Er stützt sich im übrigen an einer vorgespannten Druckfeder 25 ab. Auch von dem Greifbacken 23 erstreckt sich ein Führungszapfen 26 fort,

- 7 -

der ebenfalls in einer parallel zur Schwalbenschwanzführung 15 verlaufenden Führungsbohrung im längsbeweglichen Greifbacken 16 aufgenommen ist. Auch dieser Führungszapfen ist innerhalb vorbestimmter Grenzen längsbeweglich und steht darüber hinaus mit einem nur angedeuteten Vibrationsantrieb 27 in Antriebsverbindung. Im konkreten Falle handelt es sich um einen elektromagnetischen Vibrationsantrieb, der hinsichtlich seiner Detailausgestaltung keiner Erörterung bedarf. Über eine gestrichelt angedeutete Versorgungsleitung 28, die sich durch die Drucklasche 17 und den Betätigungshebel 20 hindurcherstreckt und ein Anschlußkabel 29 ist dieser Vibrationsantrieb mit elektrischer Energie versorgbar. In dem an die Drucklasche 17 angrenzenden Bereich des Betätigungshebels 20 befindet sich ein Einstellschalter 30 mit Betätigungsknopf 31 zur Veränderung der Frequenz des auf die Greifbacke 23 wirkenden Vibrationsantriebes 27.

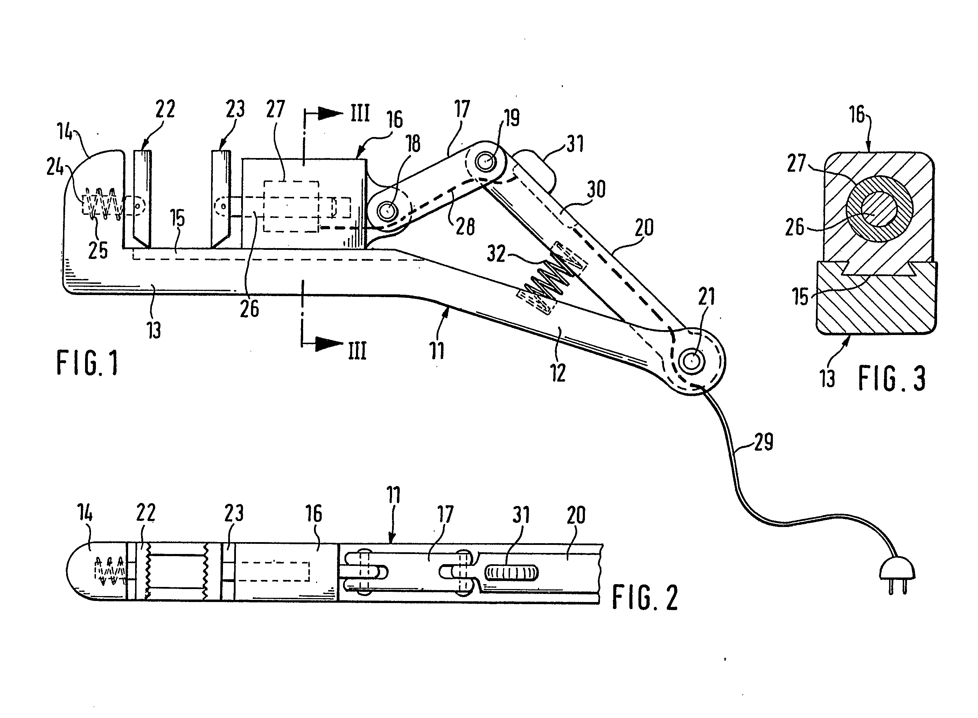

Bei bestimmungsgemäßer Verwendung wird die erfindungsgemäße Zange so an einem aus einem Verankerungsgrund herausragenden Ende eines Bolzens oder eines sonstigen Objektes angesetzt, daß dieser aus dem Verankerungsgrund herausragende Abschnitt zwischen den beiden Greifbacken 22, 23 erfaßt wird. Die dafür erforderliche Verschiebung des Greifbackens 23 in Richtung auf den Greifbacken 22 erfolgt durch Niederdrücken des Betätigungshebels 20 aus der in Fig. 1 ersichtlichen Lage in Richtung auf das Griffstück 12, und zwar gegen die Wirkung der zwischen dem Griffstück und dem Betätigungshebel angeordneten Rückstellfeder 32. Angesichts der durch die Drucklasche 17 vermittelten Kniehebelwirkung sind auf diese Weise erhebliche Spannkräfte auf ein zwischen den Greifbacken aufgenommenes Objekt aufbringbar. Nach dem Ansetzen der Zange kann durch Betätigung des Betätigungsknopfes 31 über den Schalter 30 der Vibrationsantrieb 27 eingeschaltet und auf die gewünschte Vibrationsfrequenz eingestellt werden. Dieser Vibrationsantrieb bringt über die Greifbacke 23 Querkräfte auf das zwischen den Greifbacken erfaßte Objekt auf, wobei angesichts der Abpufferung der Greifbacke 22 an der vorgespannten Feder 25 das Objekt begrenzte Schwingbewegungen in Richtung der durch die Führungszapfen 24, 26 vorgegebenen Führungsrichtung, also quer zu seiner Erstreckung im Verankerungsgrund, ausführt. Durch diese Vibrationen, deren Ausmaß den Erfordernissen des Einsatzfalles angepaßt werden können, tritt eine schnelle Lockerung des Objektes im Verankerungsgrund ein, so daß das Ausziehen des Objektes aus dem Verankerungsgrund im Vergleich zu der Handhabung bekannter Zangen verhältnismäßig leicht durchführbar ist.

Besondere Bedeutung kommt dieser erfindungsgemäßen Zange in der Ausbildung als zahnärztliches Instrument zum Ziehen von Zähnen zu.

Patentansprüche
================

1. Zange mit zwei zwischen einer Öffnungs- und einer Schließlage gegeneinander beweg- und in letzterer verspannbaren Greifbacken zum Erfassen von Objekten, insbesondere zahnärztliches Instrument zum Ziehen von Zähnen,
dadurch gekennzeichnet,
daß wenigstens eine der Greifbacken (22, 23) unabhängig von deren Bewegbarkeit in die Schließ- und Öffnungslagen bewegbar geführt und mittels eines intermittierend wirkenden Antriebs (27) mit vorbestimmter Frequenz und kleiner Amplitude pulsierend angetrieben ist.

2. Zange nach Anspruch 1, dadurch gekennzeichnet, daß der Vibrationsantrieb (27) wenigstens einer Greifbacke (23) in Richtung der Schließ- und Öffnungsbewegungen der Backen (22, 23) wirkt und daß demgemäß wenigstens diese Greifbacke in einem Backenhalter (16) relativ zu den Schließ- und Öffnungsbewegungen bewegbar geführt ist.

3. Zange nach Anspruch 1 oder 2, dadurch gekennzeichnet, daß der Vibrationsantrieb (27) hinsichtlich Frequenz und/oder Amplitude einstellbar ist.

4. Zange nach einem der Ansprüche 1 bis 3, dadurch gekennzeichnet, daß bei auf eine Greifbacke (23) wirkendem Vibrationsantrieb (27) die zweite Greifbacke (22) elastisch nachgiebig in einem Backenhalter (14) gelagert ist.

5. Zange nach einem der Ansprüche 1 bis 4, dadurch gekennzeichnet, daß die Greifbacken (22, 23) austauschbar in Backenhaltern (14, 16) aufgenommen sind.

6. Zange nach einem der Ansprüche 1 bis 5, gekennzeichnet durch einen an einem Handstück (11) in Richtung der Schließ- und Öffnungsbewegungen verschiebbar geführten Backenhalter (16) mit einer Greifbacke (23) sowie dadurch, daß der andere Backenhalter (14) dem Handstück fest zugeordnet ist.

7. Zange nach einem der Ansprüche 1 bis 6, dadurch gekennzeichnet, daß die Greifbacken (22, 23) mittels eines von Hand betätigbaren Kniehebelantriebs (17, 20) in ihre Greif- und Spannlagen betätigbar sind.

8. Zange nach Anspruch 6 oder 7, dadurch gekennzeichnet, daß der Kniehebelantrieb für den am Handstück (11) geführten Backenhalter (16) aus einem mit seinem einen Ende am Handstück angelenkten Betätigungshebel (20) und einer dessen anderes Ende mit dem Backenhalter verbindenden Drucklasche (17) besteht.

FIG.1

FIG.2

FIG.3

Europäisches
Patentamt

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | DE - B2 - 2 631 157 (KÜHL)<br><br>* Spalte 3, Zeile 6 bis Spalte 4, Zeile 10; Fig. 1 * | 1,3,5 |
| A | DE - B - 1 297 810 (SPECHT)<br><br>* Ansprüche 1, 2 * | 1,3 |
| A | DE - B - 1 286 690 (HEIMANN)<br><br>* Spalte 2, Zeilen 14 bis 33; Fig. 1 * | 1,6-8 |
| A | DE - A - 1 541 204 (GEYER)<br><br>* Anspruch 1 * | 1 |
| A | FR - A1 - 2 316 911 (POITEVIN)<br><br>* Anspruch 4 * | 1 |
| A | US - A - 2 848 812 (FUEST)<br><br>* Spalte 2, Zeile 48 bis Spalte 3, Zeile 23 * | 1 |
| A | DE - C - 555 330 (SCHUSTER)<br>-- | |
| A | US - A - 2 977 683 (WILTSE)<br>---- | |

**KLASSIFIKATION DER ANMELDUNG (Int. Cl.³)**

A 61 C 3/14

B 25 B 7/12

**RECHERCHIERTE SACHGEBIETE (Int. Cl.³)**

A 61 C 3/00

B 25 B 7/00

**KATEGORIE DER GENANNTEN DOKUMENTE**

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort<br>Berlin | Abschlußdatum der Recherche<br>05-03-1982 | Prüfer<br>SIMON |
|---|---|---|

EPA form 1503.1  06.78